# EUROPÄISCHE PATENTSCHRIFT

(11) **EP 4 105 524 B1**
(45) Veröffentlichungstag und Bekanntmachung des Hinweises auf die Patenterteilung: **29.01.2025**
(21) Anmeldenummer: 22179160.1
(22) Anmeldetag: 15.06.2022
(51) Int. Cl.: F16J 15/34

(54) **DICHTRING EINER GLEITRINGDICHTUNG SOWIE GLEITRINGDICHTUNG MIT EINEM SOLCHEN DICHTRING**
SEALING RING OF A SLIDING RING SEAL AND SLIDING RING SEAL WITH SUCH A SEALING RING
BAGUE D'ÉTANCHÉITÉ D'UN JOINT D'ÉTANCHÉITÉ À BAGUES GLISSANTES, AINSI QUE JOINT D'ÉTANCHÉITÉ À BAGUES GLISSANTES DOTÉ D'UNE TELLE BAGUE D'ÉTANCHÉITÉ

(30) Priorität: 18.06.2021 DE 102021003139
(43) Veröffentlichungstag der Anmeldung: 21.12.2022
(73) Patentinhaber: KACO GmbH + Co. KG, 74912 Kirchardt (DE)
(72) Erfinder: Schuller, Simon, 74388 Talheim (DE); Podeswa, Matthias, 74842 Billigheim (DE); Sauter, Bernd, 74889 Sinsheim-Weiler (DE); Gerner, Sven, 74172 Neckarsulm (DE); Fehrenbacher, Cornelius, 74226 Nordheim (DE); Schebesch, Markus, 74078 Heilbronn (DE); Wunder, Wilhelm, 74360 Ilsfeld (DE); Epple, Stefan, 74321 Bietigheim-Bissingen (DE); Genesius, Andreas, 74076 Heilbronn (DE); Reichert, Joachim, 74388 Talheim (DE)
(74) Vertreter: Kohl, Karl-Heinz

(56) Entgegenhaltungen:
- CN-A- 111 350 824
- CN-A- 111 473 115
- JP-A- S6 199 717
- US-A1- 2018 172 162
- US-A1- 2019 376 558
- US-A1- 2021 054 935

## Beschreibung

Die Erfindung betrifft einen Dichtring einer Gleitringdichtung nach dem Oberbegriff des Anspruches 1 sowie eine Gleitringdichtung mit einem solchen Dichtring nach Anspruch 20 bzw. 21.

Es sind Gleitringdichtungen bekannt, deren beide Dichtringe in Form eines Gleit- und eines Gegenringes aus porösem Material bestehen. Die beiden Dichtringe liegen unter Bildung eines Dichtspaltes mit ihren Dichtflächen aneinander. Die Poren in den Dichtflächen der Dichtringe ermöglichen den Zutritt des abzudichtenden Mediums in den Dichtspalt, wodurch die Dichtringe bei relativer Drehung zueinander geringfügig voneinander abheben. Das Dokument US2021/054935 offenbart einen Dichtungsring gemäß der Präambel von Anspruch 1. Ähnliche Dichtringen sind auch aus US2019/376558 und US2018/172162 bekannt.

Üblicherweise befindet sich das abzudichtende Medium am Außendurchmesser der Dichtringe. Werden solche Gleitringdichtungen für Anwendungen mit hohen Drehzahlen/Umfangsgeschwindigkeiten vorgesehen, wie sie insbesondere bei der E-Mobilität üblich sind, stoßen solche Gleitringdichtungen mit porösem Material an ihre Grenzen. Bei den hohen Drehzahlen, die größer etwa 8.000 1/min sind, üblicherweise zwischen etwa 12.000 bis 16.000 1/min und in Sonderfällen bei etwa 25.000 1/min liegen, treten höhere Reibmomente, eine verringerte Schmierung im Dichtspalt sowie ein nicht mehr zulässiges Leckageverhalten auf. Dies ist insbesondere in Kombination mit einem abzudichtenden Medium zu sehen, das am Innendurchmesser der Dichtringe vorhanden ist.

Um diesem Problem zu begegnen, ist es bekannt, in die Dichtfläche zumindest des einen Dichtringes gezielt Strömungskanäle einzubringen. Sie haben allerdings den Nachteil, dass entweder die Leckage oder die Reibung hoch sind.

Wenn die Strukturen in den Dichtflächen keine richtungsabhängige gerichtete Gestalt haben, dann sind solche Dichtringe für beide Drehrichtungen der Dichtringe geeignet. Allerdings haben solche nicht gerichteten Strukturen Performance-Nachteile gegenüber gerichteten Strukturen. Mit solchen nicht gerichteten Strukturen ist zwar der Einsatz in beide Drehrichtungen der Gleitringe möglich, jedoch tritt hierbei erhöhte Leckage auf, und zwar in beiden Drehrichtungen der Dichtringe. Zudem zeigen sich verschlechterte Reibungseigenschaften im Vergleich zu drehrichtungsabhängig gestalteten Strukturen.

Der Erfindung liegt daher die Aufgabe zugrunde, den gattungsgemäßen Dichtring sowie die Gleitringdichtung so auszubilden, dass einerseits ein optimales Reibungsverhalten und andererseits eine nur geringe Leckage erreicht werden.

Diese Aufgabe wird beim gattungsgemäßen Dichtring erfindungsgemäß mit den kennzeichnenden Merkmalen des Anspruches 1 und bei den Gleitringdichtungen erfindungsgemäß mit den Merkmalen der Ansprüche 20 und 21 gelöst.

Beim erfindungsgemäßen Dichtring hat der Ausströmkanal keine Verbindung zur abzudichtenden Mediumsseite und zur Leckageseite. Der Einströmkanal, der mit der abzudichtenden Mediumsseite verbunden ist, ist ebenfalls ohne Verbindung zur Leckageseite. Durch eine solche strukturelle Gestaltung der Dichtfläche des Dichtringes wird erreicht, dass einerseits ausreichend Medium in den Dichtspalt zwischen den beiden Dichtringen einer Gleitringdichtung gelangen kann, so dass ein hervorragendes Reibverhalten erreicht wird. Zum anderen sorgt der Ausströmkanal dafür, dass über den Einströmkanal in Richtung auf die Leckageseite gelangendes abzudichtendes Medium aufgefangen und wieder zurück in den Bereich des abzudichtenden Mediums geführt wird. Dadurch wird eine nur geringe Leckage erzielt.

Der erfindungsmäße Dichtring zeichnet sich dadurch aus, dass er zwei gegensätzliche Anforderungen optimal erfüllt: eine geringe Reibung und nur wenig Leckage.

Vorteilhaft ist der Ausströmkanal auf der von der abzudichtenden Mediumsseite abgewandten Seite des Einströmkanales vorgesehen. Dadurch ist sichergestellt, dass das in den Einströmkanal gelangende Medium vor dem Austritt an der Leckageseite in den Ausströmkanal gelangt und von ihm wieder zurück auf die abzudichtende Mediumsseite geleitet wird.

Vorteilhaft verläuft der Ausströmkanal unter einem Winkel zur Umfangsrichtung der Dichtfläche. So kann der Ausströmkanal so in der Dichtfläche angeordnet sein, dass er sich von einem Ende aus in Richtung auf die abzudichtende Mediumsseite erstreckt. Dadurch wird sichergestellt, dass das zurückzuführende Medium weg von der Leckageseite in Richtung auf die abzudichtende Mediumsseite gefördert wird.

Der Ausströmkanal hat vorteilhaft Abstand vom Einströmkanal. Dies erschwert zusätzlich, dass das im Einströmkanal befindliche Medium zur Leckageseite gelangt.

Der Einströmkanal verläuft bei einer vorteilhaften Ausführungsform geneigt in Bezug auf eine durch sein inneres Ende verlaufende Tangentiale. Dadurch wird eine gerichtete Struktur des Einströmkanales gewährleistet, wodurch eine gezielte Beeinflussung der Strömung im Dichtspalt sichergestellt ist. Der gerichtete Verlauf des Einströmkanales ermöglicht einen hohen Eintrag des abzudichtenden Mediums in den Dichtspalt einer Gleitringdichtung und damit des Aufbaues eines entsprechenden hydrostatischen und/oder hydrodynamisches Druckes, wodurch die Reibung vermindert wird. Die damit verbundene Erhöhung der Leckage wird dadurch aufgefangen, dass das Medium in den Ausströmkanal gelangt, der das Medium wieder zurück zur abzudichtenden Mediumsseite führt.

Eine optimale Rückführung des Mediums in Richtung auf die abzudichtende Mediumsseite ergibt sich, wenn der Ausströmkanal von einem Ende ausgehend in Richtung auf sein anderes Ende sich verbreiternd ausgebildet ist. Dieses andere Ende des Ausströmkanales liegt näher bei der abzudichtenden Mediumsseite als das andere Ende des Ausströmkanales. Die Verbreiterung des Ausströmkanales stellt sicher, dass das Medium zuverlässig in die Mediumsseite zurückgeführt wird. Die Breite des Ausströmkanales kann auch konstant sein, oder sich zum anderen Ende des Ausströmkanales verschmälern.

Die Verbreiterung des Ausströmkanales kann stetig, aber auch stufenweise erfolgen, je nach Anwendungsfall des Dichtringes.

Der Einströmkanal und der Ausströmkanal haben vorteilhaft gleiche Tiefe.

Je nach Einsatzbedingung ist es aber auch möglich, dass der Einströmkanal und der Ausströmkanal unterschiedlich tief sind.

Vorteilhaft ist die Breite des Einströmkanales größer als dessen Tiefe. Dies trägt zu einer optimalen Funktionalität des Dichtringes wesentlich bei.

Der Einströmkanal und der Ausströmkanal sind vorteilhaft durch einen Teil der Dichtfläche voneinander getrennt, wobei der radiale Abstand zwischen dem Einströmkanal und dem Ausströmkanal größer als etwa 0,1 mm ist.

Der Einströmkanal und/oder der Ausströmkanal sind vorteilhaft als flache Nuten ausgebildet. Dies trägt dazu bei, dass einerseits ausreichend Medium in den Dichtspalt gelangen kann, dass aber ein zu starker Austritt des Mediums in Richtung auf die Leckageseite vermieden wird.

Die Tiefe des Einströmkanales und/oder des Ausströmkanales liegt in einem Bereich zwischen 0 bis etwa 100 µm, vorzugsweise zwischen 0 und etwa 50 µm, insbesondere zwischen etwa 6 µm und etwa 50 µm.

Das Strömungsverhalten in den Kanälen wird in vorteilhafter Weise günstig beeinflusst, wenn der Einströmkanal und/oder der Ausströmkanal geneigt verlaufende Seitenwände haben. Der Neigungswinkel, bezogen auf die Dichtfläche, ist vorteilhaft kleiner etwa 90°.

Bei einer weiteren erfindungsgemäßen Ausbildung ist das Volumen des Einströmkanales kleiner als das Volumen des Ausströmkanales. Unter Volumen ist der aus der Dichtfläche zur Bildung der Kanäle entfernte Materialanteil zu verstehen.

Der Ein- und/oder Ausströmkanal können konstante oder auch nicht konstante Tiefe haben, je nach Einsatzfall.

Die erfindungsgemäße Gleitringdichtung zeichnet sich dadurch aus, dass sie mit einem erfindungsgemäßen Dichtring versehen ist.

Bei einer anderen erfindungsgemäßen Ausbildung ist die Gleitringdichtung so ausgebildet, dass der eine Dichtring den wenigstens einen Einströmkanal und der andere Dichtring den wenigstens einen Ausströmkanal aufweisen. Bei einer solchen Ausbildung sind die unterschiedlichen Kanäle auf die beiden Dichtringe verteilt.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einer in der Zeichnung dargestellten Ausführungsform näher erläutert. Es zeigen
- Fig. 1: in einem Axialhalbschnitt eine erfindungsgemäße Gleitringdichtung,
- Fig. 2: eine Ansicht eines erfindungsgemäßen Dichtringes der erfindungsgemäßen Gleitringdichtung gemäß Fig. 1,
- Fig. 3: einen Schnitt längs der Linie A-A in Fig. 2,
- Fig. 4: den Ausschnitt Z in Fig. 2 in vergrößerter Darstellung,
- Fig. 5: einen Schnitt längs der Linie B-B in Fig. 4,
- Fig. 6: in vergrößerter Darstellung einen Schnitt längs der Line C-C in Fig. 4,
- Fig. 7: in vergrößerter Darstellung einen Schnitt längs der Line D-D in Fig. 4,
- Fig. 8: in vergrößerter Darstellung einen Schnitt längs der Line E-E in Fig. 4,
- Fig. 9a und 9b: jeweils in vergrößerter Darstellung die Strömungsverhältnisse in der Dichtfläche des erfindungsgemäßen Dichtringes beim Drehen in einer Richtung,
- Fig. 10a und 10b: in Darstellungen entsprechend den Fig. 9a und 9b die Strömungsverhältnisse beim Drehen des Dichtringes in der umgekehrten Richtung.

Die Gleitringdichtung zeichnet sich dadurch aus, dass sie einen optimalen Kompromiss aus minimaler Leckage und minimaler Reibung aufweist.

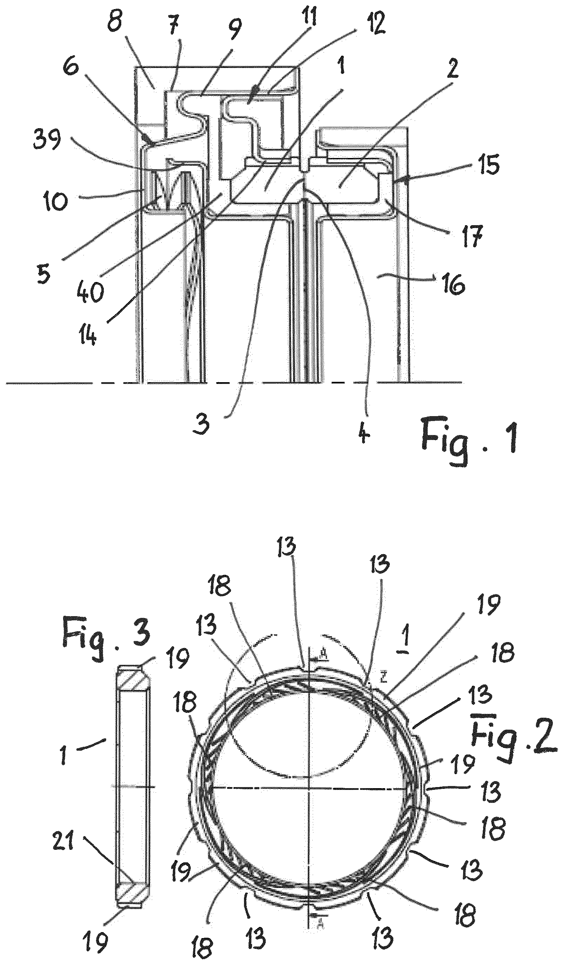

In Fig. 1 ist eine mögliche Ausführungsform einer Gleitringdichtung beispielhaft dargestellt. Sie kann abweichend vom dargestellten Ausführungsbeispiel jeden anderen geeigneten Aufbau haben. Die Gleitringdichtung hat zwei Dichtringe 1, 2, von denen der Dichtring 1 als Gleitring drehfest angeordnet ist, während der Dichtring 2 als Gegenring drehfest mit der abzudichtenden Welle verbunden und gegenüber dem Dichtring 1 im Einsatz drehbar ist. Die beiden Dichtringe 1, 2 haben aneinander liegende Dichtfläche 3, 4, die in eine Radialebene der Gleitringdichtung liegen und einen Dichtspalt bilden.

Der Dichtring 1 liegt unter Axialkraft mit seiner Dichtfläche 3 an der Dichtfläche 4 des Dichtringes 2 an. Die Axialkraft wird durch wenigstens eine Feder 5 erreicht, die auf den Dichtring 1 eine maximale Kraft ausübt, so dass er dichtend am Dichtring 2 anliegt.

Die Feder 5 wird beispielhaft durch Tellerfedern gebildet, die sich axial an einem Gehäuse 6 abstützen, das in eine Einbauöffnung 7 eines Aggregates 8 in bekannter Weise eingepresst wird.

Das Gehäuse 6 hat einen zylindrischen Abschnitt 9, mit dem das Gehäuse 6 unter Presssitz in der Einbauöffnung 7 gehalten ist. Die Feder 5 stützt sich an einem radial verlaufenden Anschlag 10 axial ab.

Um Dichtring 1 und Dichtring 2 dichtend aneinander anliegen zu lassen, stützt sich die Feder 5 zudem an einer Hülse 39 ab. Sie nimmt den Dichtring 1 über einen elastischen Presssitz auf. Dazu ist ein elastomeres Bauteil 40 zwischen der Hülse 39 und dem Dichtring 1 angeordnet. Das elastomere Bauteil 40 bildet eine statische Abdichtung gegenüber dem abzudichtenden Medium und ist mittels Klemmung zwischen dem Gehäuse 6 und einem Haltering 11 fixiert.

Der Dichtring 1 ist im Haltering 11 untergebracht, der mit einem zylindrischen Mantel 12 unter Pressung an der Innenseite des Abschnittes 9 des Gehäuses 6 anliegt. Der Dichtring 1 wird vom Haltering 11 axial geführt und gegen ein Verdrehen gesichert.

Um die Axialbeweglichkeit des Dichtringes 1 zu gewährleisten, ist er an seiner äußeren Umfangsseite mit axialen Vertiefungen 13 versehen (Fig. 2), in die axiale Führungsteile 14 des Halteringes 11 eingreifen (Fig. 1).

Der Dichtring 2 ist in einem Haltering 15 aufgenommen, der in bekannter Weise drehfest auf der Welle 16 sitzt. Der Dichtring 2 ist über eine Haltemanschette 17 mit dem Haltering 15 drehfest verbunden. Die Haltemanschette 17 umgibt den Dichtring 2 an seiner Innenseite sowie an seiner vom Dichtring 1 abgewandten Außenseite (Fig. 1) und besteht vorteilhaft aus elastomeren Material, um eine statische Abdichtung gegenüber dem abzudichtendem Medium zu gewährleisten.

Einer der beiden Dichtringe 1, 2 ist in seiner Dichtfläche 3, 4 mit einer Struktur 18 versehen, die nachfolgend im Einzelnen beschrieben wird. Im Folgenden wird davon ausgegangen, dass die Struktur 18 am Dichtring 1 vorgesehen ist. Sie kann aber auch am Dichtring 2 vorhanden sein.

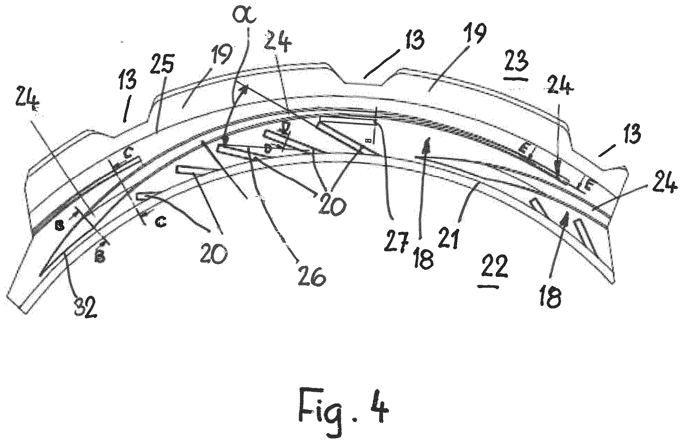

Der Dichtring 1 hat an seiner äußeren Umfangsfläche radial vorstehende Rippen 19, die sich vorteilhaft über die axiale Breite der äußeren Mantelfläche des Dichtringes 1 erstrecken. Zwischen den Rippen 19 sind die Vertiefungen 13 vorgesehen (Fig. 2 und 4).

Die ringförmige Dichtfläche 3 ist eben ausgebbildet und mit der Struktur 18 versehen. Die Strukturen 18 sind, wie aus Fig. 2 hervorgeht, über den Umfang des Dichtringes 1 verteilt angeordnet.

Anhand von Fig. 4 wird die eine dieser Strukturen 18 näher beschrieben. Sie weist Einströmkanäle 20 auf, die in Umfangsrichtung des Dichtringes 1 mit Abstand hintereinander angeordnet sind. Die inneren Enden der Einströmkanäle 20 stehen mit einem Druckbereich 22 (Mediumsbereich) in Verbindung, der von einem Gleitflächeninnendurchmesser 21 des Dichtringes 1 begrenzt ist. Der Druckbereich 22 ist durch den Dichtring 1 von einem Leckagebereich 23 getrennt, der beispielsweise die Atmosphäre ist.

Die Dichtflächen 3, 4 der Dichtringe 1, 2 sind über jeweils eine Fase mit der Ober- und der Unterseite der Dichtringe 1, 2 verbunden.

Die Struktur 18 weist außer den Einströmkanälen 20 einen Ausströmkanal 24 auf, der sich beispielhaft über einen Winkelbereich von 60° erstrecken kann. Der Ausströmkanal 24 erstreckt sich in Umfangsrichtung des Dichtringes 1, wobei seine radiale Breite von einem Ende zum anderen Ende stetig zunimmt.

Der Ausströmkanal 24 ist so in der Dichtfläche 3 angeordnet, dass sein schmaleres Ende größeren Abstand vom Druckbereich 22 hat als sein anderes, breites Ende. Der Ausströmkanal 24 hat radialen Abstand vom inneren Gleitflächendurchmesser 21 des Dichtringes 1 und damit keine Verbindung zum Druckbereich 22. Die Kanäle 20, 24 haben darüber hinaus Abstand vom äußeren Gleitflächendurchmesser 25 des Dichtringes 1, von der die Rippen 19 radial abstehen. Die Kanäle 20, 24 sind somit nicht mit dem Leckagebereich 23 verbunden. Der Ausströmkanal 24 ist derart in der Dichtfläche 3 vorgesehen, dass sein schmaleres Ende geringeren Abstand vom äußeren Gleitflächendurchmesser 25 hat als sein breites Ende.

Wie aus den Fig. 2 und 4 hervorgeht, sind die Strukturen 18 über den Umfang der Dichtfläche 3 so vorgesehen, dass das schmale Ende des Ausströmkanales 24 jeweils das breite Ende des Ausströmkanales 24 der benachbarten Struktur 18 übergreift. Dadurch wird erreicht, dass über den Umfang der Dichtfläche 3 eine gleichmäßige Funktion der Strukturen 18 gewährleistet ist.

Da der Ausströmkanal 24 über seine Länge sich stetig dem inneren Gleitflächendurchmesser 21 nähert, haben die Einströmkanäle 20 in Umfangsrichtung zunehmend kleinere Länge.

Die Einströmkanäle 20 liegen unter einem Winkel α zu einer durch das radial innere Ende des Einströmkanales 20 verlaufenden Tangentialen 26 (Fig. 4).

Wie aus Fig. 4 hervorgeht, haben die Einströmkanäle 20 jeweils geringen Abstand vom Ausströmkanal 24. Vorteilhaft haben alle Einströmkanäle 20 den gleichen Abstand vom Ausströmkanal 24. Je nach Anwendungsfall können auch unterschiedliche Abstände eingestellt werden.

Der Neigungswinkel α der Einströmkanäle 20 ist ≤ 90° und beträgt vorteilhaft weniger als 60°. Besonders vorteilhaft ist ein Neigungswinkel α von weniger als 45°. Die Neigungswinkel α der Einströmkanäle 20 kann bei allen Einströmkanälen 20 gleich oder verschieden sein.

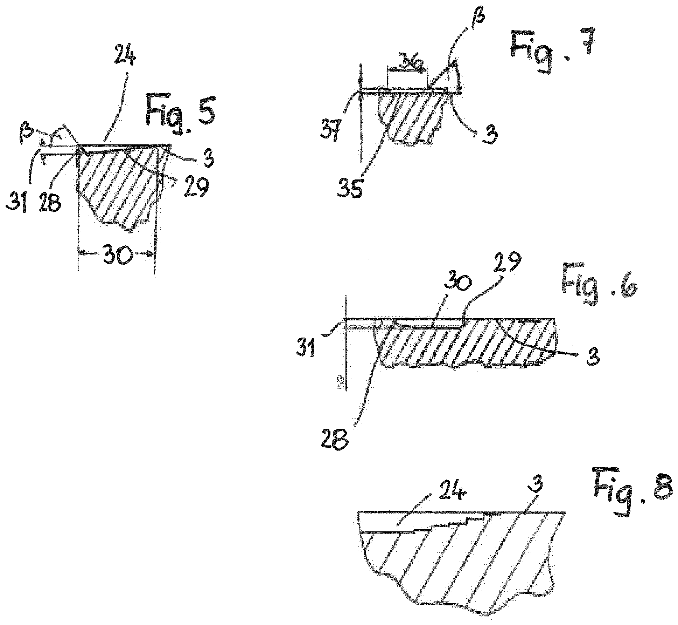

Der radiale Abstand 27 (Fig. 7) zwischen den Einströmkanälen 20 und dem Ausströmkanal 24 liegt in einem Bereich vorteilhaft ≥ 1/10 mm.

Die Einströmkanäle 20 und der Ausströmkanal 24 werden jeweils durch Vertiefungen in der Dichtfläche 3 gebildet.

Wie aus Fig. 5 hervorgeht, hat der Ausströmkanal 24 zwei stumpfwinklig zueinander liegende Seitenflächen 28, 29, von denen die dem Leckagebereich 23 zugewandte Seitenfläche 28 wesentlich kürzer ist als die dem Mediumsbereich 22 zugewandte Seitenfläche 29, bezogen auf die Radialrichtung des Dichtringes 1. Die Seitenfläche 28 schließt darum unter einem größeren Winkel an die Dichtfläche 3 an als die flacher verlaufende Seitenfläche 29. Der Neigungswinkel β der Seitenflächen 28, 29 bezüglich der Dichtfläche 3 ist kleiner als 90°, vorteilhaft ≤ 60°. Besonders vorteilhaft ist es, wenn der Neigungswinkel β kleiner etwa 40° ist.

Der Neigungswinkel der Seitenflächen 28, 29 kann gleich oder verschieden sein.

Wie aus Fig. 5 weiter hervorgeht, ist die Breite 30 des Ausströmkanales 24 größer als dessen maximale, in radialer Richtung gemessene Tiefe 31. Das Verhältnis von Breite 30 zu Tiefe 31 des Ausströmkanales 24 ist somit größer als 1.

Fig. 5 zeigt die Querschnittsausbildung des Ausströmkanales 24 nahe seinem breiteren Ende. Die den Ausströmkanal 24 endseitig begrenzende Wand 32 (Fig. 4) verläuft parallel zur inneren Umfangsfläche 21 des Dichtringes 1.

Mit Abstand vom breiteren Ende des Ausströmkanales 24 ändert sich die Querschnittsform, wie aus Fig. 6 hervorgeht. Die Seitenfläche 28 ist mit der Seitenfläche 29 über einen ebenen Boden 32 verbunden, der parallel zur Dichtfläche 3 verläuft. Vorteilhaft haben die Seitenflächen 28, 29 in diesem Bereich des Ausströmkanales 24 den gleichen Neigungswinkel β bezüglich der Dichtfläche 3.

Die Einströmkanäle 20 haben eine ähnliche Querschnittsgestaltung wie der Ausströmkanal 24. Wie Fig. 7 zeigt, haben die Einströmkanäle 20 unter dem Neigungswinkel β zur Dichtfläche 3 geneigt verlaufende Seitenflächen 33, 34, die durch einen vorteilhaft parallel zur Dichtfläche 3 verlaufenden Boden 35 miteinander verbunden sind. Im Unterschied zum Ausströmkanal 24 ändert sich die Querschnittsform der Einströmkanäle 20 über ihre Länge nicht.

In vorteilhafter Weise haben die Seitenflächen 33, 34 den gleichen Neigungswinkel β in Bezug auf die Dichtfläche 3.

Auch bei den Einströmkanälen 20 ist vorgesehen, dass die Breite 36 größer ist als die Tiefe 37.

Im dargestellten Ausführungsbeispiel ist die Breite 30, 36 der Ausström- und Einströmkanäle um ein Mehrfaches größer als deren Tiefe 31, 37.

Die Einströmkanäle 20 und/oder der Ausströmkanal 24 der Struktur 18 können konstante Tiefe haben. Je nach Anwendungsbereich können die Kanäle 20, 24 so ausgebildet sein, dass sich ihre Tiefe 31, 37 kontinuierlich oder schrittweise verändert.

Ein Beispiel für die schrittweise Veränderung der Tiefe zeigt Fig. 8. Im dargestellten und beschriebenen Ausführungsbeispiel ist diese Gestaltung im Bereich des schmalen Endes des Ausströmkanales 24 vorgesehen. Beginnend von der Dichtfläche 3 nimmt die Tiefe des Ausströmkanales 24 schrittweise zu. Eine derartige Tiefengestaltung kann auch bei den Einströmkanälen 20 vorgesehen sein.

Je nach Anwendungsfall der Gleitringdichtung können die Einströmkanäle 20 und der Ausströmkanal 24 der Struktur 18 gleich tief sein. Es ist selbstverständlich möglich, dass die Einströmkanäle 20 und der Ausströmkanal 24 unterschiedliche Tiefe haben.

Die Einströmkanäle 20 und der Ausströmkanal 24 sind durch verhältnismäßig flache Nuten gebildet. Ihre Tiefe liegt in einem Bereich von 0 bis etwa 100 µm, vorteilhaft in einem Bereich zwischen 0 und etwa 50 µm. Ein besonders vorteilhafter Tiefenbereich liegt bei etwa 6 bis etwa 50 µm. Die Einströmkanäle 20 sind so auf der Dichtfläche 3 vorgesehen, dass sich ihre inneren Enden, in Achsrichtung des Dichtringes 1 gesehen, auf einem zur Achse des Dichtringes koaxialen Kreis befinden (Fig. 4). Da sich der Ausströmkanal 24 in Richtung auf den Druckbereich 22 nähert, nimmt die Länge der Einströmkanäle 20 in Richtung auf das breitere Ende des Ausströmkanales 24 ab.

Beim dargestellten bevorzugten Ausführungsbeispiel sind die Einströmkanäle 20 und der Ausströmkanal 24 auf der Dichtfläche 3 des Dichtringes 1 vorgesehen. Es besteht aber auch die Möglichkeit, die Einströmkanäle 20 beispielsweise auf der Dichtfläche 3 des Dichtringes 1 und den Ausströmkanal 24 auf der Dichtfläche 4 des anderen Dichtringes 2 vorzusehen.

Die Dichtringe 1, 2 bestehen vorteilhaft aus einem harten Material, insbesondere aus SiC. Auch andere harte Materialien, wie Stahl oder Edelstahl, kommen in Betracht.

Grundsätzlich ist es auch möglich, dass die beiden Dichtringe 1, 2 aus unterschiedlichen Materialien bestehen. Hier können hart-weich-Paarungen zum Einsatz kommen. Bespielhaft kann ein harter Dichtring 1,2 aus SIC mit einem weichen Dichtring 1, 2 aus Kohlewerkstoff gepaart werden. Vorteilhaft ist die Struktur auf dem Dichtring 1, 2 aus hartem Werkstoff vorgesehen.

Der Ausströmkanal 24 verbreitert sich im dargestellten Ausführungsbeispiel kontinuierlich. Er kann aber auch schrittweise in Richtung auf das abzudichtende Medium (Druckbereich 22) stufenweise in seiner Breite zunehmen. Der Ausströmkanal kann aber auch konstante Breite haben, oder sich in Richtung auf das abzudichtende Medium (Druckbereich 22) verjüngen.

Zur Herstellung der als Vertiefungen ausgebildeten Einströmkanäle 20 und Ausströmkanal 24 können übliche Herstellungsverfahren eingesetzt werden, wie beispielsweise ein Laserprozess oder - bei metallischem Material - ein PCM-Verfahren.

Um eine optimale Funktion des Dichtringes 1 zu erhalten, sind die Einströmkanäle 20 und der Ausströmkanal 24 der Struktur 18 so in der Dichtfläche 3 vorgesehen, dass das Volumen der Vertiefungen der Einströmkanäle 20 geringer ist als das Volumen des Ausströmkanales 24. Das Verhältnis des aus der Dichtfläche 3 entfernten Volumenmaterials der Einströmkanäle 20 zum Ausströmkanal 24 ist somit kleiner als 1. Durch diese Gestaltung der Struktur 18 wird erreicht, dass das von den Einströmkanälen 20 aufgenommene abzudichtende Medium auf jeden Fall vollständig über den Ausströmkanal 24 zurück zum Druckbereich 22 gefördert wird.

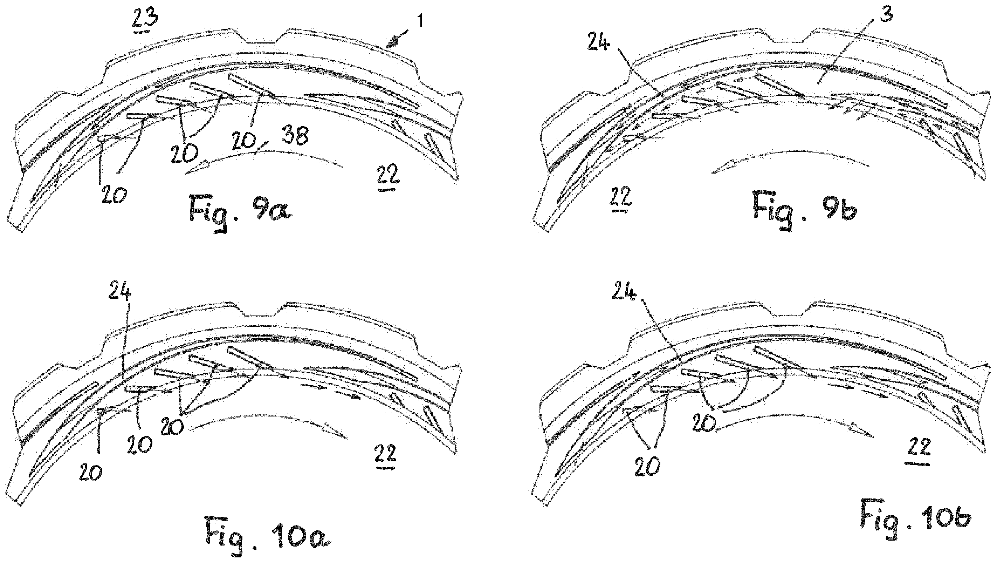

Die Figuren 9a und 9b zeigen die Wirkung der Strukturen 18 im Einsatz der Gleitringdichtung. Der (nicht dargestellte) Dichtring 2 dreht in Richtung des Pfeiles 38, wobei, durch Pfeile angedeutet, ein Teil des abzudichtenden Mediums aus dem Druckbereich 22 in die Einströmkanäle 20 des Dichtringes 1 gelangt. Dieses Medium bildet in dem durch die aneinander liegenden Dichtflächen 3, 4 gebildeten Dichtspalt ein Hydraulikpolster aus, wodurch die Dichtringe 1, 2 geringfügig voneinander abheben. Dadurch wird die Reibung an den Dichtflächen 3, 4 wesentlich herabgesetzt. Da die Einströmkanäle 20 nach außen zur Leckageseite 23 vom Ausströmkanal 24 umgeben werden, gelangt das Medium aus den Einströmkanälen 20 in den Ausströmkanal 24. Er fördert das Medium, wie durch die eingezeichneten Strömungspfeile kenntlich gemacht, zurück in den Druckbereich 22. Dadurch wird die Leckage sehr gering gehalten, da der Ausströmkanal 24 das aus den Einströmkanälen 20 zugeführte Medium vollständig aufnehmen kann.

Da die Ausströmkanäle 24 der Strukturen 18 in Umfangsrichtung einander überlappen, ist gewährleistet, dass das Medium aus den Einströmkanälen 22 nicht nach außen in den Leckagebereich 23 gelangt, sondern von den Ausströmkanälen 24 aufgenommen und zum Druckbereich 22 zurückgeführt wird.

Wie aus Fig. 9b hervorgeht, kann ein Teil des aus den Einströmkanälen 20 austretenden Mediums auf der Dichtfläche 3 längs der dem Druckbereich 22 zugewandten Seite des Ausströmkanales 24 zurück zum Druckbereich 22 gefördert werden.

Da der Ausströmkanal 24 von der abzudichtenden Mediumsseite (Druckbereich 22) getrennt ist, erfolgt bei einer umgekehrten Drehrichtung des Dichtringes 2 kein Eintrag des Mediums in den Dichtspalt zwischen den beiden Dichtflächen 3, 4, der zur Leckage führen würde. Die umgekehrte Drehrichtung tritt beispielsweise bei einer Rückwärtsfahrt des Fahrzeuges auf, wie in den Fig. 10a und 10b dargestellt. Das Medium gelangt bei der Rückwärtsfahrt in das breitere Ende der Ausströmkanäle 24 und wird über die Einströmkanäle 20 zurück in den Druckbereich 22 gefördert, wie die eingezeichneten Strömungspfeile zeigen.

Die Trennung der Ausströmkanäle 24 von der abzudichtenden Mediumsseite 22 erzeugt außerdem bei Drehung des Dichtringes 2 in Vorzugsrichtung (Fig. 9a und 9b) eine hydrodynamische Druckwirkung, die öffnend auf den Dichtspalt zwischen den Dichtflächen 3, 4 wirkt. Dies wirkt sich zusätzlich vorteilhaft auf eine verringerte Reibung aus.

Die Gleitringdichtung mit den Dichtringen 1, 2 ist zum Einsatz bei hohen Drehzahlen bzw. hohen Umfangsgeschwindigkeiten besonders geeignet. Solche hohen Drehzahlen/Umfangsgeschwindigkeiten liegen im Bereich von etwa größer 8.000 1/min, üblicherweise bei etwa 12.000 bis 16.000 1/min. In Sonderfällen sind sogar Drehzahlen/Umfangsgeschwindigkeiten in der Größenordnung von etwa 25.000 1/min möglich. Die Gleitringdichtung ist insbesondere im Bereich der E-Mobilität hervorragend geeignet, wo solche hohen Drehzahlen üblich sind.

Bei den Ausführungsbeispielen der Fig. 1 bis 10b liegt das abzudichtende Medium (Druckbereich 22) am inneren Gleitflächendurchmesser 21 an. Das abzudichtende Medium kann aber ebenso am äußeren Gleitflächendurchmesser 25 anliegen.

## Patentansprüche

1. Dichtring einer Gleitringdichtung, mit einer Dichtfläche (3, 4), in der wenigstens eine Förderstruktur (18) vorgesehen ist, die wenigstens einen Einströmkanal (20) und wenigstens einen Ausströmkanal (24) aufweist, wobei der Einströmkanal (20) mit einer abzudichtenden Mediumsseite (22) verbunden ist, die durch den Dichtring (1, 2) von einer Leckageseite (23) getrennt ist und der Ausströmkanal (24) ohne Verbindung zur abzudichtenden Mediumsseite (22) und der Einströmkanal (20) ohne Verbindung zur Leckageseite (23) sind,
**dadurch gekennzeichnet, dass**
der Ausströmkanal (24) ohne Verbindung zur Leckageseite (23) ist.

2. Dichtring nach Anspruch 1,
**dadurch gekennzeichnet, dass**
der Ausströmkanal (24) auf der von der abzudichtenden Mediumsseite (22) abgewandten Seite des Einströmkanales (20) vorgesehen ist.

3. Dichtring nach Anspruch 1 oder 2,
**dadurch gekennzeichnet, dass**
der Ausströmkanal (24) unter einem Winkel zur Umfangsrichtung der Dichtfläche verläuft.

4. Dichtring nach einem der Ansprüche 1 bis 3,
**dadurch gekennzeichnet, dass**
der Ausströmkanal (24) Abstand vom Einströmkanal (20) hat.

5. Dichtring nach einem der Ansprüche 1 bis 4,
**dadurch gekennzeichnet, dass**
der Einströmkanal (20) geneigt in Bezug auf eine durch sein inneres Ende verlaufende Tangentiale (26) angeordnet ist.

6. Dichtring nach einem der Ansprüche 1 bis 5,
**dadurch gekennzeichnet, dass**
der Ausströmkanal (24) von einem Ende ausgehend in Richtung auf sein anderes Ende sich verbreiternd ausgebildet ist.

7. Dichtring nach Anspruch 6,
**dadurch gekennzeichnet, dass**
sich der Ausströmkanal (24) stetig verbreitert.

8. Dichtring nach Anspruch 6,
**dadurch gekennzeichnet, dass**
sich der Ausströmkanal (24) stufenweise verbreitert.

9. Dichtring nach einem der Ansprüche 1 bis 8,
**dadurch gekennzeichnet, dass**
der Einströmkanal (20) und der Ausströmkanal (24) gleiche Tiefe haben.

10. Dichtring nach einem der Ansprüche 1 bis 8,
**dadurch gekennzeichnet, dass**
der Einströmkanal (20) und der Ausströmkanal (24) unterschiedliche Tiefe haben.

11. Dichtring nach einem der Ansprüche 1 bis 10,
**dadurch gekennzeichnet, dass**
die Breite (36) des Einströmkanales (20) größer ist als dessen Tiefe.

12. Dichtring nach einem der Ansprüche 1 bis 11,
**dadurch gekennzeichnet, dass**
der Einströmkanal (20) und der Ausströmkanal (24) durch einen Teil der Dichtfläche (3, 4) voneinander getrennt sind.

13. Dichtring nach einem der Ansprüche 1 bis 12,
**dadurch gekennzeichnet, dass**
der Abstand zwischen dem Einströmkanal (20) und dem Ausströmkanal (24) größer als etwa 0,1 mm beträgt.

14. Dichtring nach einem der Ansprüche 1 bis 13,
**dadurch gekennzeichnet, dass**
der Einströmkanal (20) und/oder der Ausströmkanal (24) eine Tiefe (31, 37) haben, die in einem Bereich zwischen 0 bis etwa 100 µm, vorzugsweise zwischen 0 µm und etwa 50 µm, insbesondere zwischen etwa 6 µm und etwa 50 µm liegt.

15. Dichtring nach einem der Ansprüche 1 bis 14,
**dadurch gekennzeichnet, dass** der Einströmkanal (20) und/oder der Ausströmkanal (24) geneigt verlaufende Seitenwände (28, 29; 39, 34) haben.

16. Dichtring nach Anspruch 15,
**dadurch gekennzeichnet, dass**
die Seitenwände (28, 29; 33, 34) unter einem Winkel (β) ≤90° geneigt zur Dichtfläche (3, 4) liegen.

17. Dichtring nach einem der Ansprüche 1 bis 16,
**dadurch gekennzeichnet, dass**
das Volumen des Einströmkanales (20) kleiner ist als das Volumen des Ausströmkanales (24).

18. Dichtring nach einem der Ansprüche 1 bis 17,
**dadurch gekennzeichnet, dass**
der Ein- und/oder Ausströmkanal (20, 24) eine konstante Tiefe haben.

19. Dichtring nach einem der Ansprüche 1 bis 17,
**dadurch gekennzeichnet, dass**
der Ein- und/oder Ausströmkanales (20, 24) nicht konstante Tiefe hat.

20. Gleitringdichtung mit einem Dichtring (1, 2) nach einem der Ansprüche 1 bis 19.

21. Gleitringdichtung mit einem Dichtring (1, 2) nach einem der Ansprüche 1 bis 19, die mit Dichtflächen (3, 4) aneinander liegen und von denen der eine Dichtring in seiner Dichtfläche (3, 4) den wenigstens einen Einströmkanal (20) und der andere Dichtring in seiner Dichtfläche (3, 4) den wenigstens einen Ausströmkanal (24) aufweisen, von denen der Einströmkanal (20) mit der abzudichtenden Mediumsseite (22) verbunden und ohne Verbindung zur Leckageseite (23) und der Ausströmkanal (24) ohne Verbindung zur abzudichtenden Mediumsseite (22) und zur Leckageseite (23) sind.

## Claims

1. Sealing ring of a mechanical seal, having a sealing face (3, 4) in which at least one conveying structure (18) is provided, which has at least one inflow channel (20) and at least one outflow channel (24), the inflow channel (20) being connected to a Medium side (22) to be sealed, which is separated from a leakage side (23) by the sealing ring (1, 2) and the outflow channel (24) is not connected to the Medium side (22) to be sealed and the inflow channel (20) is not connected to the leakage side (23),
**characterised in that**
the outflow channel (24) is without connection to the leakage side (23).

2. Sealing ring according to claim 1,
**characterised in that**
the outflow channel (24) is provided on the side of the inflow channel (20) facing away from the Medium side (22) to be sealed.

3. Sealing ring according to claim 1 or 2,
**characterised in that**
the outflow channel (24) extends at an angle to the circumferential direction of the sealing surface.

4. Sealing ring according to one of claims 1 to 3,
**characterised in that**
the outflow channel (24) is at a distance from the inflow channel (20).

5. Sealing ring according to one of claims 1 to 4,
**characterised in that**
the inflow channel (20) is arranged inclined regarding a tangential line (26) running through its inner end.

6. Sealing ring according to one of claims 1 to 5,
**characterised in that**
the outflow channel (24) is designed to widen from one end in the direction of its other end.

7. Sealing ring according to claim 6,
**characterised in that**
the outflow channel (24) widens continuously.

8. Sealing ring according to claim 6,
**characterised in that**
the outflow channel (24) widens in stages.

9. Sealing ring according to one of claims 1 to 8,
**characterised in that**
the inflow channel (20) and the outflow channel (24) have the same depth.

10. Sealing ring according to one of claims 1 to 8,
**characterised in that**
the inflow channel (20) and the outflow channel (24) have different depths.

11. Sealing ring according to one of claims 1 to 10,
**characterised in that**
the width (36) of the inflow channel (20) is greater than its depth.

12. Sealing ring according to one of claims 1 to 11,
**characterised in that**
the inflow channel (20) and the outflow channel (24) are separated from each other by a part of the sealing surface (3, 4).

13. Sealing ring according to one of claims 1 to 12,
**characterised in that**
the distance between the inflow channel (20) and the outflow channel (24) is greater than about 0.1 mm.

14. Sealing ring according to one of claims 1 to 13,
**characterised in that**
the inflow channel (20) and/or the outflow channel (24) have a depth (31, 37) which is in a range between 0 and about 100 µm, preferably between 0 µm and about 50 µm, in particular between about 6 µm and about 50 µm.

15. Sealing ring according to one of claims 1 to 14,
**characterised in that**
the inflow channel (20) and/or the outflow channel (24) have inclined side walls (28, 29; 39, 34).

16. Sealing ring according to claim 15,
**characterised in that**
the side walls (28, 29; 33, 34) are inclined at an angle (β) of ≤ 90° to the sealing surface (3, 4).

17. Sealing ring according to one of claims 1 to 16,
**characterised in that**
the volume of the inflow channel (20) is smaller than the volume of the outflow channel (24).

18. Sealing ring according to one of claims 1 to 17,
**characterised in that**
the inflow and/or outflow channel (20, 24) have a constant depth.

19. Sealing ring according to one of claims 1 to 17,
**characterised in that**
the inflow and/or outflow channel (20, 24) does not have a constant depth.

20. Mechanical seal with a sealing ring (1, 2) according to one of claims 1 to 19.

21. Mechanical seal with a sealing ring (1, 2) according to one of claims 1 to 19, which are adjacent to each other with their sealing faces (3, 4) and of that one sealing ring has in its sealing face (3, 4) the at least one inflow channel (20) and the other sealing ring has in its sealing face (3, 4) has at least one outflow channel (24), of which the inflow channel (20) is connected to the medium side (22) to be sealed and has no connection to the leakage side (23) and the outflow channel (24) has no connection to the medium side (22) to be sealed and to the leakage side (23).

## Revendications

1. Bague d'étanchéité d'une garniture mécanique, avec une surface d'étanchéité (3, 4) dans laquelle est prévue au moins une structure de transport (18) qui présente au moins un canal d'entrée (20) et au moins un canal de sortie (24), le canal d'entrée (20) étant relié à un côté médium (22) à rendre étanche, qui est séparé d'un côté de fuite (23) par la bague d'étanchéité (1, 2), et le canal de sortie (24) est sans liaison avec le côté de médium à étancher (22) et le canal d'entrée (20) est sans liaison avec le côté de fuite (23),
**caractérisé en ce que**
le canal de sortie (24) est sans liaison avec le côté de la fuite (23).

2. Bague d'étanchéité selon la revendication 1,
**caractérisé en ce que**
le canal de sortie (24) est prévu sur le côté du canal d'entrée (20) opposé au côté du médium (22) à étancher.

3. Bague d'étanchéité selon la revendication 1 ou 2,
**caractérisé en ce que**
le canal de sortie (24) s'étend selon un angle par rapport à la direction périphérique de la surface d'étanchéité.

4. Bague d'étanchéité selon l'une des revendications 1 à 3,
**caractérisé en ce que**
le canal de sortie (24) est espacé du canal d'entrée (20).

5. Bague d'étanchéité selon l'une des revendications 1 à 4,
**caractérisé en ce que**
le canal d'entrée (20) est incliné par rapport à une tangente (26) traversant son extrémité intérieure.

6. Bague d'étanchéité selon l'une quelconque des revendications 1 à 5,
**caractérisé en ce que**
le canal d'évacuation (24) est évasé à partir d'une extrémité en direction de son autre extrémité.

7. Bague d'étanchéité selon la revendication 6,
**caractérisé en ce que**
le canal d'écoulement (24) s'élargit en permanence.

8. Bague d'étanchéité selon la revendication 6,
**caractérisé en ce que**
le canal d'écoulement (24) s'élargit par étapes.

9. Bague d'étanchéité selon l'une des revendications 1 à 8,
**caractérisé en ce que**
le canal d'entrée (20) et le canal de sortie (24) ont la même profondeur.

10. Bague d'étanchéité selon l'une des revendications 1 à 8,
**caractérisé en ce que**
le canal d'entrée (20) et le canal de sortie (24) ont une profondeur différente.

11. Bague d'étanchéité selon l'une des revendications 1 à 10,
**caractérisé en ce que**
la largeur (36) du canal d'entrée (20) est supérieure à sa profondeur.

12. Bague d'étanchéité selon l'une des revendications 1 à 11,
**caractérisé en ce que**
Le canal d'entrée (20) et le canal de sortie (24) sont séparés l'un de l'autre par une partie de la surface d'étanchéité (3, 4).

13. Bague d'étanchéité selon l'une des revendications 1 à 12,
**caractérisé en ce que**
la distance entre le canal d'entrée (20) et le canal de sortie (24) est supérieure à environ 0,1 mm.

14. Bague d'étanchéité selon l'une des revendications 1 à 13,
**caractérisé en ce que**
le canal d'entrée (20) et/ou le canal de sortie (24) ont une profondeur (31, 37) qui se situe dans une plage comprise entre 0 et environ 100 µm, de préférence entre 0 µm et environ 50 µm, en particulier entre environ 6 µm et environ 50 µm.

15. Bague d'étanchéité selon l'une quelconque des revendications 1 à 14,
**caractérisé en ce que**
le canal d'entrée (20) et/ou le canal de sortie (24) ont des parois latérales inclinées (28, 29 ; 39, 34).

16. Bague d'étanchéité selon la revendication 15,
**caractérisé en ce que**
les parois latérales (28, 29 ; 33, 34) sont inclinées d'un angle (β) de ≤ 90° par rapport à la surface d'étanchéité (3, 4).

17. Bague d'étanchéité selon l'une des revendications 1 à 16,
**caractérisé en ce que**
le volume du canal d'entrée (20) est inférieur au volume du canal de sortie (24).

18. Bague d'étanchéité selon l'une des revendications 1 à 17,
**caractérisé en ce que**
le canal d'entrée et/ou le canal de sortie (20, 24) ont une profondeur constante.

19. Bague d'étanchéité selon l'une des revendications 1 à 17,
**caractérisé en ce que**
le canal d'entrée et/ou de sortie (20, 24) a une profondeur non constante.

20. Garniture mécanique avec une bague d'étanchéité (1, 2) selon l'une des revendications 1 à 19.

21. Garniture mécanique avec une bague d'étanchéité (1, 2) selon l'une des revendications 1 à 19,
qui sont appliquées l'une contre l'autre avec des surfaces d'étanchéité (3, 4) et dont l'une des bagues d'étanchéité présente dans sa surface d'étanchéité (3, 4) au moins un canal d'entrée (20) et l'autre bague d'étanchéité présente dans sa surface d'étanchéité (3, 4) présentent au moins un canal d'écoulement (24), dont le canal d'entrée (20) est relié au côté du milieu à étancher (22) et sans liaison avec le côté de la fuite (23) et le canal d'écoulement (24) est sans liaison avec le côté du milieu à étancher (22) et avec le côté de la fuite (23).
